# DEMANDE DE BREVET EUROPEEN

(11) **EP 4 364 554 A1**
(43) Date de publication de la demande: **08.05.2024**
(21) Numéro de dépôt: 23207364.3
(22) Date de dépôt: 02.11.2023
(51) Int. Cl.: A01D 57/20, B65G 23/44

(54) **SYSTEME DE TENSION DE BANDE**

(30) Priorité: 03.11.2022 FR 2211450
(71) Demandeur: Kuhn SAS, 67700 Saverne (FR)
(72) Inventeur: GANTZER, Christian, 57915 WOUSTVILLER (FR)
(74) Mandataire: Hager, Esther Evelyne

(57) **Abrégé**

L'invention concerne une machine agricole comprenant au moins une unité de traitement équipée d'au moins un convoyeur à bande sans fin et pouvant occuper une position de travail dans laquelle le convoyeur permet de déplacer un produit, la bande étant guidée dans son déplacement par au moins deux rouleaux guidés en rotation autour d'axes longitudinaux, un système de tension étant associé à la ou chaque bande et comprenant un accumulateur d'énergie et un vérin de tension permettant de faire varier l'écartement entre les axes longitudinaux, à la ou chaque bande est associé un système de régulation qui empêche, en position de travail de l'unité de traitement, la circulation d'huile depuis une première conduite reliant le système de régulation à un distributeur hydraulique, en direction d'une deuxième conduite reliant le système de régulation au vérin de tension, lorsque la pression dans la deuxième conduite est supérieure à une valeur limite.

## Description

La présente invention concerne le domaine du machinisme agricole et notamment les machines agricoles intégrant au moins un convoyeur à bande pour déplacer un produit. Elle a pour objet une machine du type précitée avec un convoyeur dont le moyen de tension de la bande est amélioré.

Les convoyeurs à bande, montés sur des andaineurs à tapis ou des faucheuses par exemple, permettent de déplacer du produit afin de les déposer sous la forme d'andains. Ces andains sont disposés longitudinalement à la direction d'avance de la machine afin de pouvoir être facilement ramassés par une machine de ramassage, comme par exemple une presse ou une ensileuse.

La bande est dite sans fin du fait qu'elle forme une boucle fermée. Elle est enroulée autour d'au moins deux rouleaux. Généralement, un des rouleaux est moteur. Un ou plusieurs autre(s) rouleau(x) peu(ven)t être suiveur(s). Afin d'assurer l'entrainement de la bande, respectivement l'adhérence entre les rouleaux et la bande, la bande doit être tendue. La tension de la bande peut notamment être réglée en modifiant la distance entre deux rouleaux, respectivement en augmentant ou diminuant la distance entre les axes longitudinaux de deux rouleaux. Une tension insuffisante de la bande augmente le risque de frottements de celle-ci avec les pièces situées en-dessous, particulièrement les pièces situées dans le voisinage du milieu qui est le plus en porte-à-faux. Une tension insuffisante risque également d'entrainer le patinage de la bande sur au moins un des rouleaux.

L'invention porte plus précisément sur une machine agricole de récolte destinée à être déplacée dans une direction d'avance, cette machine comprenant au moins une unité de traitement avec au moins un convoyeur équipé d'une bande sans fin, l'unité de traitement pouvant occuper une position de travail, dans laquelle le ou chaque convoyeur permet de déplacer un produit, la bande étant guidée dans son déplacement par au moins deux rouleaux, chacun guidé en rotation autour d'un axe longitudinal respectif. Un système de tension est associé à la ou à chaque bande et comprend un accumulateur d'énergie et un vérin de tension permettant de faire varier l'écartement entre les axes longitudinaux.

Une machine telle que décrite précédemment est divulguée dans le document US20170215342. Dans sa variante de la figure 9, le système de tension de la bande de cette machine comprend des vérins de tension, pour chacun desquels la chambre de tension à alimenter pour tendre la bande respective est reliée à un accumulateur d'énergie. De plus, la chambre de détente de chaque vérin de tension à alimenter pour détendre la bande respective, fonctionne en circuit fermé en position de travail. Or, l'huile contenue dans cette chambre de détente ne pouvant pas être comprimée, elle ne peut pas en sortir en position de travail. Il arrive cependant que la bande se dilate rapidement suite à une importante augmentation de température au cours d'une journée, et/ou plus lentement par vieillissement. Il résulte de ce qui précède que si la bande d'une telle machine se dilate, le ou chaque vérin de tension ne peut pas s'allonger. Une dilatation de la bande, quelle qu'en soit l'origine, implique alors une tension moindre de la bande pouvant entrainer une perte d'adhérence de la bande sur les rouleaux, voire son patinage sur les rouleaux.

Cette perte d'adhérence peut être progressive : la bande aura d'abord tendance à patiner incidemment, sans que cela ne soit visible. C'est seulement lorsque la bande patine beaucoup (ou n'est plus entrainée du tout), que l'utilisateur risque de se rendre compte du problème. Le fait que la bande patine, même occasionnellement, augmente le risque de bourrage de produit au niveau du convoyeur et implique un andain moins régulier, ce qui peut entrainer des complications pour la machine de ramassage de l'andain. Il est ainsi nécessaire de s'assurer régulièrement que la bande est suffisamment tendue. Dans la pratique, l'expérience a montré que les utilisateurs ne prennent pas souvent la peine de s'astreindre à ce type de vérifications régulières. En outre, le patinage de la bande sur un rouleau implique une usure prématurée de celle-ci.

Un autre inconvénient du circuit hydraulique de la figure 9 du document US20170215342 réside dans le fait que, quelle que soit la position du distributeur hydraulique 3-3, la pompe délivre constamment de l'huile. Le fait de pomper de l'huile en continu, en plus d'être inutile et de solliciter la pompe de manière supplémentaire, n'est pas économique et entraine une surconsommation de carburant sur la durée totale du chantier agricole. Enfin, une huile qui est continuellement mise en circulation par une pompe a tendance à chauffer, ce qui peut induire une détérioration de ses propriétés, et à une baisse de rendement de la machine.

Selon les variantes de réalisation des figures 10 et 11 du document US20170215342, en position de travail de la machine, afin de tendre la bande respective, chacune des chambres des vérins de tension est reliée à un accumulateur d'énergie additionnel de sorte que la tension de la bande ou des bandes reste constante, même après dilatation. En outre, une alimentation constante en huile n'est pas nécessaire, du moins pas dans la position de travail. Le document US20170215342 permet ainsi, au travers des variantes de réalisation des figures 10 et 11, d'assurer un système de tension de la bande dont la consommation énergétique est moindre. Un inconvénient majeur de ces réalisations est cependant le nombre de composants hydrauliques nécessaires, plus précisément le nombre d'accumulateurs et de vérins, y compris de vérins double effet, et par conséquent de connexions hydrauliques. Un tel circuit hydraulique est complexe et présente des coûts de revient, d'utilisation et d'entretien importants. Enfin, les accumulateurs d'énergie sont soumis à des règles particulières lors de leur transport en container, augmentant le prix de transport d'une telle machine.

Une machine telle que décrite plus haut est également connu du document EP 2 845 409 A1. Avec le système de régulation de ce document, lorsque le distributeur 2-2 est actionné, le vérin de tension n'est pas nécessairement relié à la pompe, même si la pression dans le vérin est insuffisante, de sorte que le risque de tension insuffisante de la bande et le risque de patinage de la bande sur les rouleaux sont plus importants qu'avec le système de régulation selon l'invention.

La présente invention a pour but de pallier au moins un des inconvénients de la solution connue précitée.

A cet effet, elle a pour objet une machine du type mentionné en introduction, caractérisée en ce qu'elle comprend un système de régulation hydraulique qui empêche, au moins en position de travail de l'unité de traitement concernée, la circulation d'huile depuis une première conduite reliant le système de régulation à un distributeur hydraulique, en direction d'une deuxième conduite reliant le système de régulation au vérin de tension, lorsque la pression dans la deuxième conduite est supérieure à une valeur limite, le système de régulation autorisant la circulation d'huile depuis la première conduite en direction de la deuxième conduite lorsque la pression dans la deuxième conduite est inférieure à la valeur limite, et en ce que l'accumulateur est relié à la deuxième conduite.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :
[Fig. 1] représente deux exemples de machines agricoles visées par l'invention, une première machine comportant deux unités de traitement et étant attelée à l'arrière d'un tracteur, et une deuxième machine attelée à l'avant du tracteur ;
[Fig. 2a] représente schématiquement un circuit hydraulique d'une machine selon l'invention, ce circuit étant relié au circuit hydraulique d'un tracteur, la machine comprenant une unité de traitement en position de travail (distributeur en position flottante) ;
[Fig. 2b] représente schématiquement un circuit hydraulique d'une machine selon l'invention comprenant deux unités de traitement, chacune comportant un vérin de tension de la bande respective, le circuit hydraulique de la machine étant relié au circuit hydraulique d'un tracteur ;
[Fig. 3] est une vue en perspective d'une unité de traitement pouvant faire partie d'une des machines de la figure 1 et de la figure 5 ;
[Fig. 4] est une vue en perspective d'un convoyeur pouvant faire partie de l'unité de traitement de la figure 3, la bande ayant été occultée afin de mieux voir le bâti ; et
[Fig. 5] est une vue schématique en perspective d'une machine selon l'invention destinée à être montée à l'arrière d'un tracteur agricole et comportant deux unités de traitement, une seule unité étant représentée.

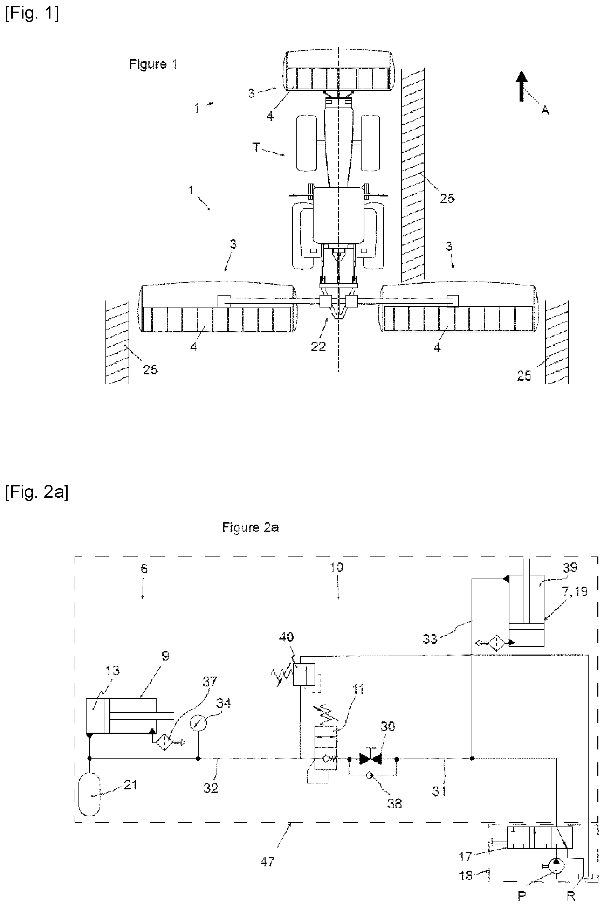

La figure 1 illustre deux machines (1) agricoles de récolte attelées à un tracteur (T). Chaque machine (1) agricole est destinée à être déplacée dans une direction d'avance (A). Chaque machine (1) comprend au moins une unité de traitement (3). Chaque unité de traitement (3) est équipée d'au moins un convoyeur (4) à bande (5) sans fin. L'unité (ou chaque unité) de traitement (3) peut occuper une position de travail dans laquelle le ou chaque convoyeur (4) permet de déplacer un produit. Le plus souvent, le produit est un produit végétal en vrac, tel que de la paille ou de l'herbe coupée. La bande (5) est guidée dans son déplacement par au moins deux rouleaux (8, 8'). Au moins lors de ce déplacement, la bande (5) forme une orbite. Chaque rouleau (8, 8') est guidé en rotation autour d'un axe longitudinal (12, 12') respectif.

A la (ou chaque) bande (5) est associé un système de tension (6). Le système de tension (6) comprend au moins un accumulateur (21) d'énergie. L'accumulateur (21) est de préférence un contenant dans lequel le volume d'huile qu'il contient peut varier. Il est préférentiellement hydropneumatique. Le système de tension (6) comprend aussi (au moins) un vérin de tension (9) permettant de faire varier l'écartement entre les axes longitudinaux (12, 12'). Le vérin de tension (9) présente une chambre de tension (13). Afin de tendre la bande (5) respective, la chambre de tension (13) est alimentée en huile. Lorsque la chambre de tension (13) est alimentée en huile, par exemple lorsqu'elle est reliée à une pompe (P), le vérin de tension (9) éloigne les axes longitudinaux (12, 12') des rouleaux (8, 8') respectifs, préférentiellement en s'allongeant.

La machine (1) agricole est préférentiellement destinée à être attelée à un tracteur (T) agricole. Le tracteur (T) permet de déplacer la machine (1) dans la direction d'avance (A). La machine (1) comporte ainsi préférentiellement au moins un cadre d'attelage destiné à être relié au dispositif d'attelage du tracteur (T). Le dispositif d'attelage du tracteur (T) peut être arrière ou frontal. Préférentiellement, une prise de force du tracteur (T) permet d'entrainer la machine (1), respectivement son ou chaque unité de traitement (3). La machine (1) pourrait cependant être automotrice.

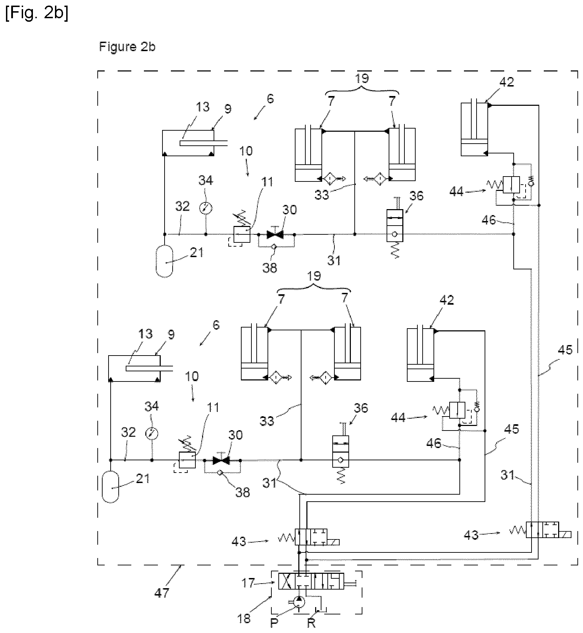

La machine (1) comprend aussi un châssis (22). Ce châssis (22) relie le cadre d'attelage à l'unité ou à chaque unité de traitement (3). La machine (1) comprend également au moins un circuit hydraulique (47) permettant de contrôler au moins certaines fonctions. Ces fonctions sont par exemple tendre la bande (5), transposer la ou chaque unité de traitement (3) entre ses positions de travail, de circulation et/ou de transport, ou encore entrainer en rotation un rouleau (8) afin de mettre la bande (5) en mouvement... etc. Le tracteur (T) comprend aussi un circuit hydraulique (18) propre. Le circuit hydraulique (18) du tracteur (T) comporte au moins une pompe (P), un réservoir (R) et au moins un distributeur (17) hydraulique. Le circuit hydraulique (18) du tracteur (T) peut être relié au circuit hydraulique (47) de la machine (1), ainsi qu'illustré sur les figures 2. Une pompe (P), un réservoir (R) et un distributeur (17) peuvent aussi être compris dans le circuit hydraulique (47) de la machine (1), notamment dans le cas d'une machine (1) automotrice.

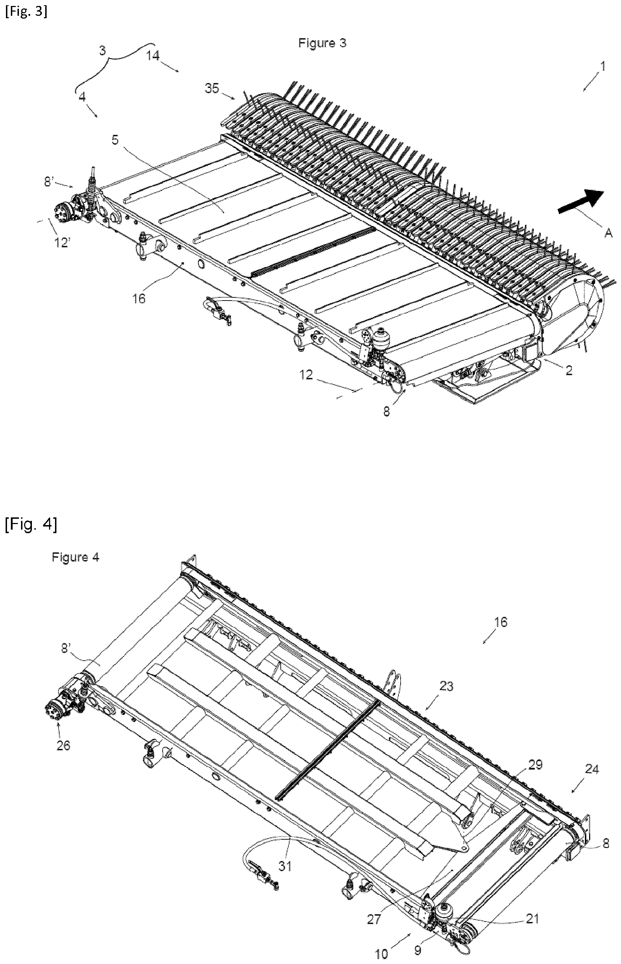

Ainsi qu'illustrée sur la figure 3, la ou chaque unité de traitement (3) peut comprendre un dispositif de récolte (14) situé, en position de travail, devant le convoyeur (4) selon la direction d'avance (A). Le dispositif de récolte (14) déplace le produit vers le convoyeur (4). Dans le mode de réalisation préféré de la figure 3, le dispositif de récolte (14) est un pickup comportant un tambour (35) équipé de dents râteleuses. Le tambour (35) peut être entrainé en rotation autour d'un axe sensiblement horizontal et orthogonal à la direction d'avance (A) afin de ramasser le produit coupé au sol (S). Dans un mode de réalisation alternatif, le dispositif de récolte (14) est une barre de fauche qui coupe le produit encore sur pieds avant de le transférer au convoyeur (4). La machine (1) est ainsi une faucheuse et/ou un andaineur à bande (5).

Conformément à l'invention, à la ou chaque bande (5) est associé un système de régulation (10) hydraulique qui empêche, au moins en position de travail de l'unité de traitement (3) concernée, la circulation d'huile depuis une première conduite (31) reliant le système de régulation (10) à un distributeur (17) hydraulique, en direction d'une deuxième conduite (32) reliant le système de régulation (10) au vérin de tension (9), lorsque la pression dans la deuxième conduite (32) est supérieure à une valeur limite. Toujours conformément à l'invention, l'accumulateur (21) est relié à la deuxième conduite (32). Grâce à ces dispositions, le système de tension (6) fonctionne en circuit fermé tant que la pression dans la deuxième conduite (32) est supérieure à la valeur limite, permettant à l'accumulateur (21) de compenser aussi bien une rétractation qu'une dilatation de la bande (5). La bande (5) est en effet souple. Sa souplesse est influencée notamment par la température. La bande (5) peut notamment être en élastomère et/ou caoutchouc.

Lorsque la pression dans la deuxième conduite (32) est inférieure à la valeur limite, le système de régulation (10) autorise la circulation d'huile depuis la première conduite (31) en direction de la deuxième conduite (32). Ainsi, la pompe (P) n'est sollicitée pour tendre la bande (5) que si cela est nécessaire, réduisant avantageusement la consommation d'énergie de la machine (1), et rendant son utilisation plus économique. On entend par « si nécessaire », si la pression dans la deuxième conduite (32) est inférieure à la valeur limite. Aussi, l'huile du circuit hydraulique (47) d'une telle machine (1) présente moins de risques de chauffer, du fait de cette circulation selon la nécessité.

De plus, le circuit hydraulique (47) de la machine (1) est simple à réaliser. En effet, le système de régulation (10) comporte un nombre restreint de composants hydrauliques, notamment d'accumulateurs et de vérins, réduisant avantageusement le prix de revient et le coût d'entretien de la machine (1). Dans le mode de réalisation préféré, le ou chaque système de tension (6) comprend en effet un unique accumulateur (21).

La figure 1 illustre précisément deux machines (1) agricoles de récolte. Une première machine (1) est montée à l'avant d'un tracteur (T). Elle est équipée d'une seule unité de traitement (3). Une deuxième machine (1) est montée à l'arrière du tracteur (T). Celle-ci est équipée de deux unités de traitement (3). Chaque unité de traitement (3) peut comporter un ou plusieurs convoyeur(s) (4) à bande (5) sans fin. Dans le mode de réalisation préféré, chaque convoyeur (4) permet de déplacer le produit transversalement à la direction d'avance (A).

Grâce à l'avance de la machine (1) et au déplacement du produit par le convoyeur (4) transversalement à la direction d'avance (A), il se forme au moins un andain (25). L'andain (25) est le produit déposé par la machine (1), respectivement par le convoyeur (4), au sol (S). L'andain (25) est ainsi longitudinal à la direction d'avance (A). En position de travail de l'unité de traitement (3) concernée, l'entrainement de la bande (5) du ou de chaque convoyeur (4) autour de son orbite respective permet de déplacer le produit. Lorsque la bande (5) est guidée par deux rouleaux (8, 8') seulement, l'orbite de la bande (5) respective est préférentiellement de forme oblongue, vue suivant un des axes longitudinaux (12, 12'). La ou chaque unité de traitement (3) peut également occuper une position de circulation dans laquelle le convoyeur (4) est plus éloigné du sol (S) qu'en position de travail. Au moins dans le cas d'une machine (1) à atteler à l'arrière du tracteur (T), l'unité de traitement (3) peut également occuper une position de transport, dans laquelle sa dimension horizontale et perpendiculaire à la direction d'avance (A) est réduite par rapport à celle dans la position de travail.

Afin d'entrainer la bande (5), au moins un des rouleaux (8, 8') est moteur. Un moteur hydraulique (26) permet d'entrainer en rotation le rouleau (8, 8') moteur autour de l'axe longitudinal (12, 12') respectif. Le moteur hydraulique (26) permet ainsi d'entrainer la bande (5). Modifier le sens de rotation du moteur hydraulique (26) permet ainsi de changer le sens de déplacement de la bande (5). Chaque convoyeur (4) peut déposer un andain (25) d'un côté ou de l'autre de l'unité de traitement (3), vu suivant la direction d'avance (A). Selon le sens de rotation de la bande (5), l'andain (25) peut être déposé d'un côté ou de l'autre de l'unité de traitement (3). Dans le cas d'une d'unité de traitement (3) comportant deux convoyeurs (4), deux andains (25) peuvent également être déposés, chacun de part et d'autre de l'unité de traitement (3). Selon une variante de réalisation, la machine (1) peut présenter deux unités de traitement (3) ou deux convoyeurs (4) déplaçables transversalement à la direction d'avance (A). Un seul andain (25) peut alors être réalisé entre les deux convoyeurs (4). Lorsque la machine (1) est reliée à l'arrière du tracteur (T), l'andain (25) est déposé au choix, vers le châssis (22) et/ou du côté opposé au châssis (22).

Dans certaines applications, la bande (5) peut aussi être guidée par trois rouleaux (8, 8') ou plus. En vue de dessus et en position de travail de l'unité de traitement (3), chaque axe longitudinal (12, 12') est préférentiellement sensiblement parallèle à la direction d'avance (A), maximisant la largeur de travail du convoyeur (4).

Ainsi que représenté sur les figures 2, le distributeur (17) hydraulique permet de relier la première conduite (31) à la pompe (P) et/ou au réservoir (R). Bien que la deuxième conduite (32) relie le système de régulation (10) au vérin de tension (9), il est cependant possible qu'un autre élément hydraulique soit monté entre le système de régulation (10) et le vérin de tension (9). Par exemple, dans une variante de réalisation non représentée, un robinet anti-retour est monté sur la deuxième conduite (32) entre le système de régulation (10) et le vérin de tension (9). De la même manière, il reste envisageable que des éléments hydrauliques soient montés sur la première conduite (31). Ainsi, tel que représenté sur la figure 2b, la première conduite (31) relie le système de régulation (10) au distributeur (17) via une valve de sélection (43) et un robinet de restriction (36) (détaillés plus loin).

Le distributeur (17) est par exemple de type 3-3 (à trois entrées et trois configurations), ou 4-4 (à quatre entrées et quatre configurations). Le distributeur (17) peut occuper au moins une configuration fermée dans laquelle il interdit toute circulation d'huile vers la première conduite (31). Le distributeur (17) peut aussi occuper une configuration flottante dans laquelle il relie la première conduite (31) au réservoir (R). Les configurations du distributeur (17) peuvent être modifiées manuellement, préférentiellement depuis la cabine du tracteur (T).

Selon une autre caractéristique intéressante, à la ou chaque bande (5) est associé un récepteur hydraulique (19). Ce récepteur hydraulique (19) est relié à la première conduite (31). Ainsi qu'il ressort des figures 2, le récepteur hydraulique (19) est préférentiellement relié à la première conduite (31) par une troisième conduite (33) hydraulique. Le récepteur hydraulique (19) assure une autre fonction que le système de tension (6) de la bande (5). Le fait de relier un récepteur hydraulique (19), respectivement la troisième conduite (33), à la première conduite (31) permet de simplifier le circuit hydraulique (47) de la machine (1), en diminuant le nombre de conduites et/ou la longueur totale des conduites. Cela permet également d'utiliser un unique distributeur pour assurer plusieurs fonctions. Le récepteur hydraulique (19) fait ainsi partie du circuit hydraulique (47) de la machine (1).

Il ressort de la figure 2a notamment, que la deuxième conduite (32) relie au moins la chambre de tension (13) et le système de régulation (10). La pression dans la chambre de tension (13) est identique à la pression dans la deuxième conduite (32). De préférence, la deuxième conduite (32) relie aussi le système de régulation (10) et l'accumulateur (21). La pression dans la chambre de tension (13) est aussi identique à la pression dans l'accumulateur (21) (côté huile). Grâce au système de régulation (10) tel que proposé ci-dessus, la pression dans la deuxième conduite (32) est augmentée jusqu'à la valeur limite, si nécessaire, à chaque fois que le récepteur hydraulique (19) est alimenté en huile, respectivement à chaque fois que le récepteur hydraulique (19) est relié à la pompe (P). Ainsi, la bande (5) est retendue, si nécessaire, à chaque fois que le récepteur hydraulique (19) est alimenté en huile, réduisant davantage encore le risque de détente de la bande (5). Par ailleurs, lorsque la pression dans la deuxième conduite (32) est supérieure à la valeur limite, le récepteur hydraulique (19) peut être alimenté en huile sans que la deuxième conduite (32) ne soit alimentée en huile. Le récepteur hydraulique (19) peut ainsi être actionné sans que la tension de la bande (5) ne soit modifiée.

Le récepteur hydraulique (19) peut notamment comporter au moins un moteur hydraulique et/ou au moins un vérin hydraulique. Lorsque le récepteur hydraulique (19) comprend au moins un moteur hydraulique relié constamment à la pompe (P) lors de l'utilisation de la machine (1), la tension de la bande (5) est augmentée dès que la pression dans la deuxième conduite (32) passe en-dessous de la valeur limite. La bande (5) ne peut ainsi pas être détendue en position de travail. Dans un mode de réalisation alternatif non représenté, le récepteur hydraulique (19) est réalisé par le moteur hydraulique (26). De préférence, le moteur hydraulique (26) permet d'entrainer la bande (5) respective autour de son orbite. Alternativement, le moteur hydraulique (26) permet d'entrainer la barre de fauche du dispositif de récolte (14). Le moteur hydraulique (26) pourrait également entrainer au moins une roue d'un automoteur.

Dans le mode de réalisation préféré, le récepteur hydraulique (19) comprend au moins un vérin de relevage (7). Le vérin de relevage (7) permet de transposer l'unité de traitement (3) associée entre sa position de travail et sa position de circulation. Le vérin de relevage (7) étant employé au minimum à chaque utilisation de la machine (1), la tension de la bande (5) est actualisée automatiquement au moins avant chaque utilisation, diminuant ainsi l'attention que doit porter l'utilisateur pour vérifier régulièrement la tension de la bande (5). En pratique, le ou chaque vérin de relevage (7) est employé à chaque demi-tour, bout de champ et à chaque fois qu'un andain (25) est croisé lors de l'avance de la machine (1). Vu la fréquence à laquelle la bande (5) est alors retendue si nécessaire, vérifier visuellement la tension de la bande (5) n'est dès lors pas nécessaire. En effet, un inconvénient majeur des machines connues de ce type est que l'utilisateur doit régulièrement penser à s'assurer que la tension de la bande (5) est suffisante, ce de manière visuelle. De plus, il n'est pas rare que l'utilisateur oublie de vérifier si la tension de la bande (5) est suffisante. Si la tension de la bande (5) est insuffisante, il peut en outre être nécessaire de retendre la bande (5), faisant perdre encore plus de temps à l'utilisateur.

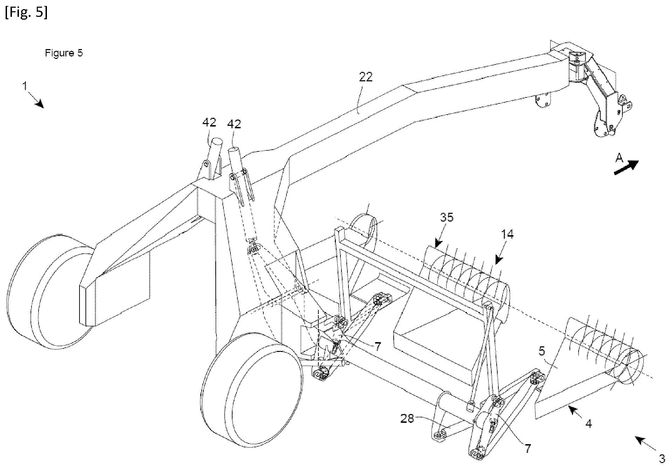

Ainsi que représenté sur la figure 1, la machine (1) peut comprendre deux unités de traitement (3). Ainsi que représenté sur la figure 5, au moins une des unités de traitement (3) peut être déplaçable transversalement à la direction d'avance (A). De préférence, à chaque unité de traitement (3) et/ou convoyeur (4) est associé au moins un vérin transversal (28) permettant de déplacer l'unité de traitement (3) associée et/ou le convoyeur (4) associé transversalement, et préférentiellement perpendiculairement, à la direction d'avance (A). Alternativement ou additionnellement, le récepteur hydraulique (19) peut comprendre un vérin transversal (28).

Lorsqu'à la ou une bande (5) est associé un récepteur hydraulique (19) relié à la première conduite (31), que ce récepteur hydraulique (19) nécessite la configuration flottante du distributeur (17) dans la position de travail de l'unité de traitement (3) concernée, et que la pression dans la deuxième conduite (32) est inférieure à la valeur limite, l'huile peut circuler depuis la deuxième conduite (32) vers le réservoir (R), provoquant une détente de la bande (5). Dans le but d'éviter la détente de la bande (5) dans ce cas, à la ou chaque bande (5) est associé un clapet anti-retour (38) monté de manière à interdire la circulation d'huile depuis la deuxième conduite (32) vers la première conduite (31) respectives. Grâce au clapet anti-retour (38), lorsque le récepteur hydraulique (19) comprend au moins un vérin de relevage (7), l'unité de traitement (3) concernée peut ainsi suivre les dénivellations du sol (S) sans que la bande (5) ne risque de se détendre.

Dans le mode de réalisation préféré, le système de régulation (10) comporte au moins un régulateur de pression (11). Le régulateur de pression (11) est agencé de manière à ce que le système de régulation (10) empêche la circulation d'huile depuis la première conduite (31) en direction de la deuxième conduite (32) lorsque la pression dans la deuxième conduite (32) est supérieure à la valeur limite. Le système de régulation (10) empêche ainsi, au moins dans la position de travail de l'unité de traitement (3) concernée, la circulation d'huile en direction de la deuxième conduite (32) lorsque la pression dans la deuxième conduite (32) est supérieure à la valeur limite. Précisément, le système de régulation (10) empêche la circulation d'huile depuis la première conduite (31) vers la deuxième conduite (32) lorsque la pression dans la chambre de tension (13) est supérieure à la valeur limite, quelle que soit la position de l'unité de traitement (3) concernée. Le régulateur de pression (11) est par ailleurs agencé de manière à ce que le système de régulation (10) autorise la circulation d'huile depuis la première conduite (31) en direction de la deuxième conduite (32) lorsque la pression dans la deuxième conduite (32) est inférieure à la valeur limite. Grâce au régulateur de pression (11), le système de régulation (10) autorise en plus, au moins dans la position de travail de l'unité de traitement (3) concernée, la circulation d'huile en direction de la chambre de tension (13) lorsque la pression dans la chambre de tension (13) est inférieure à la valeur limite. L'utilisateur peut ainsi tendre la bande (5) simplement en reliant la première conduite (31) à la pompe (P). De préférence, la valeur limite est réglable au niveau du régulateur de pression (11), permettant de l'adapter aux caractéristiques de la bande (5), du vérin de tension (9), et/ou de l'accumulateur (21).

Lorsque la pression dans la deuxième conduite (32) est supérieure à la valeur limite, un régulateur de pression (11) à trois voies envoie l'huile de la deuxième conduite (32) vers un ou le réservoir (R). Avec un régulateur de pression (11) à trois voies, il est alors nécessaire que la valeur limite soit supérieure à la pression nécessaire pour alimenter le récepteur hydraulique (19). Dans le cas contraire, le récepteur hydraulique (19) ne peut pas être actionné. En outre, si la valeur limite est supérieure à la pression nécessaire pour actionner le récepteur hydraulique (19), lorsque le récepteur hydraulique (19) ne nécessite plus d'alimentation en huile et que la pression dans la deuxième conduite (32) est supérieure à la valeur limite, alors la pompe (P) est reliée au réservoir (R), impliquant une consommation d'énergie plus importante et un risque d'échauffement de l'huile. Le régulateur de pression (11) est ainsi préférentiellement de type à deux voies. Autrement dit, le régulateur de pression (11) n'est pas directement relié à un ou au réservoir (R).

Le système de régulation (10) peut également comprendre un limiteur de pression (40) relié au ou à un réservoir (R) de manière à empêcher la circulation d'huile en direction de la deuxième conduite (32), lorsque la pression dans cette deuxième conduite (32) est supérieure à une valeur paramétrée. Un tel système de régulation (10) assure que la tension de la bande (5) ne puisse pas être telle qu'elle impliquerait une distension de la bande (5). La valeur paramétrée est préférentiellement réglable au niveau du limiteur de pression (40). Avec un système de régulation (10) comprenant un limiteur de pression (40) et pas de régulateur de pression (11), la valeur paramétrée est préférentiellement supérieure à la pression nécessaire pour actionner le récepteur hydraulique (19), afin que ce récepteur hydraulique (19) puisse être actionné.

Dans le cas où le système de régulation (10) comprend un limiteur de pression (40) et un régulateur de pression (11), la valeur paramétrée du limiteur de pression (40) est préférentiellement supérieure à la valeur limite du régulateur de pression (11), afin de permettre au régulateur de pression (11) de bloquer la circulation d'huile depuis la première conduite (31) en direction de la deuxième conduite (32). Dans le cas où le système de régulation (10) comprend un limiteur de pression (40) et un régulateur de pression (11), et que le circuit hydraulique (47) de la machine (1) comprend un récepteur hydraulique (19), le régulateur de pression (11) est préférentiellement monté entre le clapet anti-retour (38) et le limiteur de pression (40) afin que le limiteur de pression (40) permette de limiter la pression dans la deuxième conduite (32), quelle que soit la position du régulateur de pression (11).

Afin de simplifier le circuit hydraulique (47) de la machine (1), ainsi que son utilisation, en réduisant le nombre de réglages, le système de régulation (10) ne comprend préférentiellement pas de limiteur de pression (40). Également en vue de simplifier le circuit hydraulique (47) de la machine (1), le ou chaque système de régulation (10) comprend un unique régulateur de pression (11).

Afin d'autoriser une détente de la ou de chaque bande (5), notamment en position de transport de l'unité de traitement (3) concernée, une vanne d'arrêt (30) est montée en parallèle du ou de chaque clapet anti-retour (38). Cette vanne d'arrêt (30) est fermée en position de travail de l'unité de traitement (3) concernée. Ouvrir cette vanne d'arrêt (30) permet de libérer de l'huile du système de tension (6), détendant ainsi la bande (5) et évitant qu'elle ne se déforme sous l'effet d'une tension sur une période prolongée. Il est ainsi préconisé de libérer une partie de la pression du vérin de tension (9), lorsque l'unité de traitement (3) est en position de transport. La vanne d'arrêt (30) et/ou le clapet anti-retour (38) sont préférentiellement montés entre le système de régulation (10) et la première conduite (31) afin d'assurer que la pression mesurée par le régulateur de pression (11) et/ou le limiteur de pression (40) soit identique à la pression dans la deuxième conduite (32).

Ainsi qu'illustré sur la figure 4, chaque rouleau (8, 8') est monté pivotant avec un bâti (16) autour de son axe longitudinal (12, 12') respectif. Le bâti (16) fait préférentiellement partie du convoyeur (4). Afin de s'adapter aux différents écartements entre les axes longitudinaux (12, 12') des rouleaux (8, 8'), le bâti (16) comprend une partie principale (23) et un chariot (24). Le chariot (24) est déplaçable par rapport à la partie principale (23) transversalement aux axes longitudinaux (12, 12'). Sur la partie principale (23) est monté un rouleau (8, 8') et sur le chariot (24) l'autre rouleau (8, 8'). De préférence, un rouleau (8') dit fixe est monté sur la partie principale (23), et un rouleau (8) dit mobile sur le chariot (24). De préférence, le rouleau (8, 8') moteur permettant d'entrainer la bande (5) autour de son orbite est le rouleau (8') fixe.

Le chariot (24) est guidé en translation par rapport à la partie principale (23). Le chariot (24) est ainsi monté avec faculté de coulissement par rapport à la partie principale (23) parallèlement au plan passant par les axes longitudinaux (12, 12') des rouleaux (8, 8'), autorisant ainsi la variation de l'écartement entre les axes longitudinaux (12, 12'). Le vérin de tension (9) est relié d'une part au chariot (24) et d'autre part à la partie principale (23), pouvant ainsi modifier l'écartement entre les axes longitudinaux (12, 12'), respectivement entres les rouleaux (8, 8').

Préférentiellement, une traverse (27) est montée pivotante avec la partie principale (23) suivant un axe principal (29). L'axe principal (29) est perpendiculaire au plan passant par les axes longitudinaux (12, 12') des rouleaux (8, 8'). La traverse (27) est montée pivotante avec le vérin de tension (9), préférentiellement suivant un axe parallèle à l'axe principal (29). La traverse (27) est par ailleurs montée pivotante avec le chariot (24) , préférentiellement suivant un axe parallèle à l'axe principal (29). Enfin, le vérin de tension (9) est articulé avec le chariot (24), préférentiellement suivant un axe parallèle à l'axe principal (29). L'axe principal (29) est préférentiellement situé sensiblement au milieu de la largeur du convoyeur (4), permettant de diviser sensiblement par deux l'effort nécessaire à générer par le vérin de tension (9) pour déplacer le chariot (24) et tendre la bande (5).

Compte tenu de l'espacement souvent limité entre les deux flancs de la bande (5), et en vue de faciliter son montage et sa maintenance, il peut être prévu que le vérin de tension (9) soit situé en dehors du volume délimité par la bande (5). L'accès au vérin de tension (9) est ainsi facilité et une fuite d'huile au niveau du circuit hydraulique (47) de la machine (1) présente moins de risque de diminuer l'adhérence entre la bande (5) et le(s) rouleau(x) (8, 8'), évitant le patinage de la bande (5).

Le ou chaque vérin de tension (9) est préférentiellement simple effet, simplifiant le circuit hydraulique (47) de la machine (1). Alternativement, le ou chaque vérin de tension (9) est double effet, la chambre de tension (13) étant reliée à la deuxième conduite (32) et l'autre chambre à l'air par un reniflard (37). Préférentiellement, le ou chaque vérin de tension (9) est à fonctionnement linéaire, simplifiant la cinématique de la machine (1).

De manière alternative, il peut être prévu que le système de régulation (10) comporte un système électronique avec un capteur de pression mesurant la pression dans la deuxième conduite (32), et que ce système électronique permette d'ouvrir et de fermer une vanne à chaque fois que la pression dans la deuxième conduite (32) descend en-dessous, respectivement passe au-dessus, de la valeur limite. Un tel système de régulation (10) serait cependant plus complexe et présenterait un prix de revient plus important.

La figure 5 représente une machine (1) pouvant comporter plusieurs unités de traitement (3). Afin d'assurer l'orientation de l'unité de traitement (3) lors de ses transpositions entre positions de travail et de circulation, préférentiellement sensiblement parallèlement au sol (S), dans le mode de réalisation préféré de la figure 2b, le récepteur hydraulique (19) est composé de deux vérins de relevage (7). De préférence, les vérins de relevage (7) sont reliés en série. Dans l'exemple de la figure 5, les vérins de relevage (7) permettent de faire pivoter l'unité de traitement (3) autour d'au moins un axe sensiblement horizontal et sensiblement perpendiculaire à la direction d'avance (A), et préférentiellement situé à l'arrière du convoyeur (4) associé.

La troisième conduite hydraulique (33) est de préférence reliée à une chambre de levage (39) du ou de chaque vérin de relevage (7). Alimentée en huile, la chambre de levage (39) permet de transposer l'unité de traitement (3) associée depuis sa position de travail vers sa position de circulation. Pour passer de la position de circulation à la position de travail, le poids de l'unité de traitement (3) permet de la faire descendre en position de travail. Ainsi, pour passer de la position de circulation à la position de travail, la chambre de levage (39) de chaque vérin de relevage (7) peut être simplement reliée au réservoir (R). Il ressort de ce qui précède que le ou chaque vérin de relevage (7) est préférentiellement simple effet, simplifiant le circuit hydraulique (47) de la machine (1) et réduisant sa consommation d'énergie.

De préférence, le distributeur (17) peut aussi occuper une configuration de remplissage dans laquelle il permet de relier la pompe (P) et la première conduite (31). En configuration de remplissage, le distributeur (17) permet, lorsque le récepteur hydraulique (19) comporte au moins un vérin de relevage (7), de transposer l'unité de traitement (3) entre positions de travail et de circulation. En position de circulation, le distributeur (17) est en position fermée afin de maintenir (en hauteur) l'unité de traitement (3).

Sur la machine (1) de la figure 5, à la ou chaque unité de traitement (3) est associé un vérin de transport (42) permettant de transposer l'unité de traitement (3) considérée en position de transport. Une unité de traitement (3) peut atteindre sa position de transport depuis sa position de travail et/ou sa position de circulation. Dans cet exemple de réalisation, en position de transport, la dimension longitudinale de l'unité de traitement (3) est sensiblement parallèle à la direction d'avance (A), et préférentiellement sensiblement horizontale. La position de transport peut cependant être identique à la position de circulation, notamment dans le cas d'une machine (1) frontale telle que représentée sur la figure 1 à l'avant du tracteur (T).

Ainsi qu'il ressort de la figure 2b, afin de réduire le nombre et/ou la longueur des conduites hydrauliques de la machine (1), il peut être prévu que le ou chaque vérin de transport (42) soit relié à la première conduite (31) associée par une sixième conduite (46). Le vérin de transport (42) étant de préférence à double effet, une première chambre du vérin de transport (42) est reliée à la première conduite (31) par la sixième conduite (46). L'autre chambre du vérin de transport (42) est reliée au distributeur (17) par une cinquième conduite (45).

Dans le mode de réalisation préféré de la figure 2b, afin de pouvoir transposer une unité de traitement (3) en position de travail ou de circulation indépendamment de l'autre unité de traitement (3) de la machine (1), une valve de sélection (43) est associée à chaque unité de traitement (3). Chaque valve de sélection (43) est de préférence actionnable depuis le tracteur (T). Chaque valve de sélection (43) est du type 4-2, à 4 sorties et à 2 positions.

Toujours selon le mode de réalisation préféré de la figure 2b, une valve d'équilibrage (44) est montée aux bornes du ou de chaque vérin de transport (42), afin notamment d'éviter qu'au transport, le poids de la ou de chaque unité de traitement (3) n'entraine sa transposition vers la position de travail, notamment dans le cas où le vérin de transport (42) serait accidentellement relié au réservoir (R), ou encore en cas de fuite hydraulique importante.

Afin d'assurer le séquençage de l'actionnement des vérins de transport (42) et de relevage (7) lors des transpositions entre positions de travail et de transport, un robinet de restriction (36) est monté sur la première conduite (31). De préférence, le robinet de restriction (36) est monté entre l'intersection de la première conduite (31) avec la troisième conduite (33) et l'intersection de la première conduite (31) avec la sixième conduite (46) correspondantes. De préférence, le robinet de restriction (36) est monté sur la machine (1) de manière à détecter si l'unité de traitement (3) associée est en position de circulation. Lorsque l'unité de traitement (3) associée n'est pas en position de travail, notamment lorsqu'il est en position de transport ou de circulation, le robinet de restriction (36) interdit la circulation d'huile depuis les vérins de relevage (7) et de tension (9) vers un ou le réservoir (R). Lorsqu'une unité de traitement (3) est en position de travail, le robinet de restriction (36) autorise toute circulation d'huile entre le distributeur (17) et les vérins de relevage (7) et de tension (9) associés. De cette manière, avec le distributeur (17) en position flottante, il est possible de faire fonctionner la machine (1) avec une unité de traitement (3) en position de travail et l'autre unité de traitement (3) en position de circulation.

Dans la position de transport des unités de traitement (3), le distributeur (17) est en configuration fermée (ainsi que représenté figure 2b), permettant de maintenir le ou chaque vérin de relevage (7) et/ou le ou chaque vérin de transport (42) en position, évitant ainsi des accidents. Dans la position de travail d'au moins une unité de traitement (3), le distributeur (17) est en configuration flottante (ainsi que représenté figure 2a), permettant la circulation d'huile depuis la deuxième conduite (32) vers le réservoir (R), autorisant ainsi la détente de la bande (5). Dans la position de circulation des unités de traitement (3), le distributeur (17) est en configuration fermée (ainsi que représenté figure 2b), afin de maintenir le ou chaque vérin de relevage (7) dans sa position.

Par ailleurs, le ou chaque régulateur de pression (11) est agencé de telle sorte qu'il empêche la circulation d'huile depuis la première conduite (31) en direction de la deuxième conduite (32) lorsque la pression dans la deuxième conduite (32) est supérieure à la valeur limite, indépendamment de la position de l'unité de traitement (3) concernée. De la même manière, le ou chaque régulateur de pression (11) est agencé de telle manière qu'il autorise la circulation d'huile depuis la première conduite (31) en direction de la deuxième conduite (32) lorsque la pression dans la deuxième conduite (32) est inférieure à la valeur limite, ce, indépendamment de la position de l'unité de traitement (3) concernée.

De préférence, afin d'autoriser la mise en pression du vérin de tension (9) et/ou de l'accumulateur (21) d'une part, et la détente du vérin de tension (9) dans le cas d'une pression trop importante (dans le vérin de tension (9)), lorsque la pression dans la deuxième conduite (32) est inférieure à la valeur limite, le régulateur de pression (11) est agencé de telle manière qu'il autorise la circulation d'huile dans les deux sens (entre la première conduite (31) et la deuxième conduite (32)).

Afin de contrôler la pression dans le vérin de tension (9), un manomètre (34) peut être relié à la deuxième conduite (32).
Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Machine (1) agricole de récolte destinée à être déplacée dans une direction d'avance (A), la machine (1) comprenant au moins une unité de traitement (3) équipée d'au moins un convoyeur (4) à bande (5) sans fin, l'unité de traitement (3) pouvant occuper une position de travail dans laquelle le ou chaque convoyeur (4) permet de déplacer un produit, la bande (5) étant guidée dans son déplacement par au moins deux rouleaux (8, 8'), chacun guidé en rotation autour d'un axe longitudinal (12, 12') respectif, un système de tension (6) étant associé à la ou à chaque bande (5) et comprenant un accumulateur (21) d'énergie et un vérin de tension (9) permettant de faire varier l'écartement entre les axes longitudinaux (12, 12'),
**machine agricole (1) caractérisée en ce qu'**à la ou à chaque bande (5) est associé un système de régulation (10) hydraulique qui empêche, au moins en position de travail de l'unité de traitement (3) concernée, la circulation d'huile depuis une première conduite (31) reliant le système de régulation (10) à un distributeur (17) hydraulique, en direction d'une deuxième conduite (32) reliant le système de régulation (10) au vérin de tension (9), lorsque la pression dans la deuxième conduite (32) est supérieure à une valeur limite, le système de régulation (10) autorisant la circulation d'huile depuis la première conduite (31) en direction de la deuxième conduite (32) lorsque la pression dans la deuxième conduite (32) est inférieure à la valeur limite, et **en ce que** l'accumulateur (21) est relié à la deuxième conduite (32).

2. Machine agricole selon la revendication 1, **caractérisée en ce qu'**à la ou à chaque bande (5) est associé un récepteur hydraulique (19) relié à la première conduite (31).

3. Machine agricole selon la revendication 2, **caractérisée en ce que** le récepteur hydraulique (19) est réalisé par un moteur hydraulique (26) permettant d'entrainer la bande (5).

4. Machine agricole selon la revendication 2, **caractérisée en ce que** le récepteur hydraulique (19) comprend au moins un vérin de relevage (7) qui permet de transposer l'unité de traitement (3) associée entre sa position de travail et sa position de circulation dans laquelle le convoyeur (4) est plus éloigné du sol (S) qu'en position de travail.

5. Machine agricole selon l'une quelconque des revendications 1 à 4, **caractérisée en ce qu'**à la ou à chaque bande (5) est associé un clapet anti-retour (38) monté de manière à interdire la circulation d'huile depuis la deuxième conduite (32) vers la première conduite (31) respectives.

6. Machine agricole selon l'une quelconque des revendications 1 à 5, **caractérisée en ce que** le système de régulation (10) comporte au moins un régulateur de pression (11).

7. Machine agricole selon la revendication 6, **caractérisée en ce que** le système de régulation (10) ne comprend pas de limiteur de pression (40).

8. Machine agricole selon l'une quelconque des revendications 5 à 8, **caractérisée en ce que** une vanne d'arrêt (30) est montée en parallèle du ou de chaque clapet anti-retour (38).

9. Machine agricole selon les revendications 6 et 8, **caractérisée en ce que** la vanne d'arrêt (30) et/ou le clapet anti-retour (38) sont montés entre le régulateur (11) et la première conduite (31) .

10. Machine agricole selon l'une quelconque des revendications 1 à 9, **caractérisée en ce que** le ou chaque vérin de tension (9) est simple effet.
